# FASCICULE DE BREVET EUROPEEN

(11) **EP 1 133 867 B1**
(45) Date de publication et mention de la délivrance du brevet: **30.07.2003**
(21) Numéro de dépôt: 99956091.5
(22) Date de dépôt: 19.11.1999
(51) Int. Cl.: H04N 1/10

(54) **APPAREIL D'ACQUISITION D'IMAGES PAR FLUORESCENCE ET SYSTEME D'IMAGERIE COMPORTANT UN TEL APPAREIL**
VORRICHTUNG ZUR FLUORESZENZ-BILD-ERFASSUNG UND BILDFORMUNGSSYSTEM MIT EINER SOLCHEN VORRICHTUNG
FLUORESCENCE-ACTIVATED IMAGE ACQUISITION APPARATUS AND IMAGING SYSTEM COMPRISING SAME

(30) Priorité: 24.11.1998 FR 9814762
(43) Date de publication de la demande: 19.09.2001
(73) Titulaire: AR21 SA - Analyses, Recherches et Innovation Instrumentale, 92140 Clamart (FR)
(72) Inventeur: SARBACH, Christian, F-78000 Versailles (FR); DELVORDRE, Pascal, F-91300 Massy (FR); BARON, Pierre-Michel, F-92400 Courbevoie (FR)
(74) Mandataire: Vialle-Presles, Marie José
(86) Numéro de dépôt international: FR9902847
(87) Numéro de publication internationale: WO00031962

(56) Documents cités:
- EP-A- 0 747 753
- DE-A- 3 513 519
- DE-A- 3 528 216
- DE-A- 3 544 202
- PATENT ABSTRACTS OF JAPAN vol. 012, no. 273 (E-639), 29 juillet 1988 (1988-07-29) & JP 63 052574 A (CANON INC), 5 mars 1988 (1988-03-05)
- PATENT ABSTRACTS OF JAPAN vol. 097, no. 008, 29 août 1997 (1997-08-29) & JP 09 098302 A (CANON INC), 8 avril 1997 (1997-04-08)
- PATENT ABSTRACTS OF JAPAN vol. 096, no. 006, 28 juin 1996 (1996-06-28) & JP 08 050338 A (FUJI XEROX CO LTD), 20 février 1996 (1996-02-20)
- PATENT ABSTRACTS OF JAPAN vol. 018, no. 124 (E-1517), 28 février 1994 (1994-02-28) & JP 05 316279 A (KONICA CORP), 26 novembre 1993 (1993-11-26)
- PATENT ABSTRACTS OF JAPAN vol. 098, no. 011, 30 septembre 1998 (1998-09-30) & JP 10 150553 A (RICOH CO LTD), 2 juin 1998 (1998-06-02)

## Description

La présente invention se rapporte principalement à un appareil d'acquisition d'images par fluorescence et un système d'imagerie comportant un tel appareil.

Il est connu d'illuminer des supports de chromatographie planaire ou chromatographie sur couche, mince avec des rayonnements ultraviolets (UV) et d'acquérir avec une caméra vidéo des images de ces supports rendus fluorescents. Cette technique présente de nombreux inconvénients.

La distance entre la plaque chromatographique et le capteur est déterminée par les caractéristiques optiques (mise au point, distance focale, ...) de l'objectif mis en oeuvre. Les appareils de type connu ont un encombrement important.

La faible résolution et une surface limitée des capteurs du type dispositif à couplage de charge (CCD en terminologie anglo-saxonne), notamment le capteur ayant une diagonale de 0,85 mm (1/3 de pouce) limite la définition de l'image typiquement à 732 x 580 éléments d'images (pixels en terminologie anglo-saxonne).

Les appareils de type connu sont d'un prix de revient important notamment parce qu'ils mettent en oeuvre une grande chambre noire d'illumination et d'acquisition d'images et parce que les caméras vidéos mises en oeuvre correspondent à du matériel professionnel non standardisé.

De plus, les appareils du type connu ne sont pas d'une manipulation aisée ; après avoir coupé la source d'UV, on doit ouvrir la chambre noire pour retirer la plaque chromatographique traitée pour la remplacer par la plaque chromatographique suivante, on doit refermer la chambre noire avant de pouvoir allumer la source d'UV pour l'acquisition suivante.

C'est par conséquent un but de la présente invention d'offrir un appareil d'acquisition d'images par fluorescence, en haute définition, de support plan ou sensiblement plan.

C'est également un but de la présente invention d'offrir un tel appareil présentant une grande fiabilité.

C'est aussi un but de la présente invention d'offrir un tel appareil ne présentant pas de danger pour un opérateur.

C'est également un but de la présente invention d'offrir un tel appareil ayant un encombrement limité.

C'est aussi un but de la présente invention d'offrir un appareil rapide d'acquisition d'images.

C'est aussi un but de la présente invention d'offrir un appareil d'acquisition d'images facile à utiliser.

C'est également un but de la présente invention d'offrir un système d'acquisition d'images automatique susceptible de traiter de manière autonome une pluralité de supports de chromatographie.

C'est également un but de la présente invention d'offrir un tel appareil ou un tel système ayant un prix de revient modéré.

Ces buts sont atteints par un appareil selon la présente invention, d'acquisition d'images comportant une source de rayonnement UV susceptible de rendre fluorescents les supports dont on veut acquérir l'image, une fenêtre transparente aux UV et à la lumière visible, typiquement rectangulaire, de réception d'un support d'image à acquérir, un capteur linéaire dont la longueur est, de préférence sensiblement égale à la largeur de la fenêtre de réception d'un support et des moyens d'entraînement du capteur et, de préférence de la source de rayonnement UV parallèlement à un des bords de la fenêtre de réception d'un support d'images.

L'invention a principalement pour objet un appareil tel que défini dans la revendication 1.

L'invention a également pour objet un appareil d'acquisition d'images, caractérisé en ce que ledit appareil est un numériseur à plat avec des moyens de maintien de l'objet stationnaire et du déplacement du chariot.

L'invention a aussi pour objet un appareil, caractérisé en ce que le chariot comporte en outre au moins une source de rayonnement UV.

L'invention a également un appareil, caractérisé en ce que la source de rayonnement UV est une source linéaire disposée parallèlement au capteur linéaire.

L'invention a aussi pour objet un appareil, caractérisé en ce qu'il comporte une fenêtre dépourvue de vitre et correspondant à la zone d'acquisition balayée par le chariot.

L'invention a également pour objet un appareil, caractérisé en ce qu'il comporte une fenêtre correspondant à la zone d'acquisition de l'objet munie d'une vitre réalisée en un matériau transparent au rayonnement visible fluorescent et au rayonnement induisant la photoluminescence.

L'invention a également pour objet un appareil, caractérisé en ce qu'il comporte des sources de rayonnement UV multiples correspondant à plusieurs longueurs d'onde de rayonnement UV.

L'invention a aussi pour objet un appareil, caractérisé en ce qu'il comporte un capot muni de moyens d'arrêt automatique d'émission de rayonnement UV si le capot n'est pas parfaitement fermé.

L'invention a aussi pour objet un appareil, caractérisé en ce qu'il comporte un chargeur assurant l'alimentation automatique en plaque rigide de chromatographie de la fenêtre d'acquisition d'images.

L'invention concerne également un système de traitement d'images fluorescentes de chromatographie planaire, caractérisé en ce qu'il comporte un appareil selon l'invention associé à un ordinateur muni d'un logiciel de traitement d'images.

L'invention sera mieux comprise au moyen de la description ci-après et des figures annexées données comme des exemples non limitatifs et sur lesquels :
- la figure 1 est une vue schématique en coupe d'un dispositif d'acquisition d'image de type connu ;
- la figure 2 est une vue schématique en perspective de l'exemple préféré de réalisation d'un appareil selon la présente invention ;
- la figure 3 est une vue en perspective d'un exemple de réalisation d'un chariot mis en oeuvre dans l'appareil de la figure 2 ;
- la figure 4 est une vue schématique en coupe selon un plan vertical d'un exempte de réalisation d'un appareil selon la présente invention muni d'un chargeur automatique.

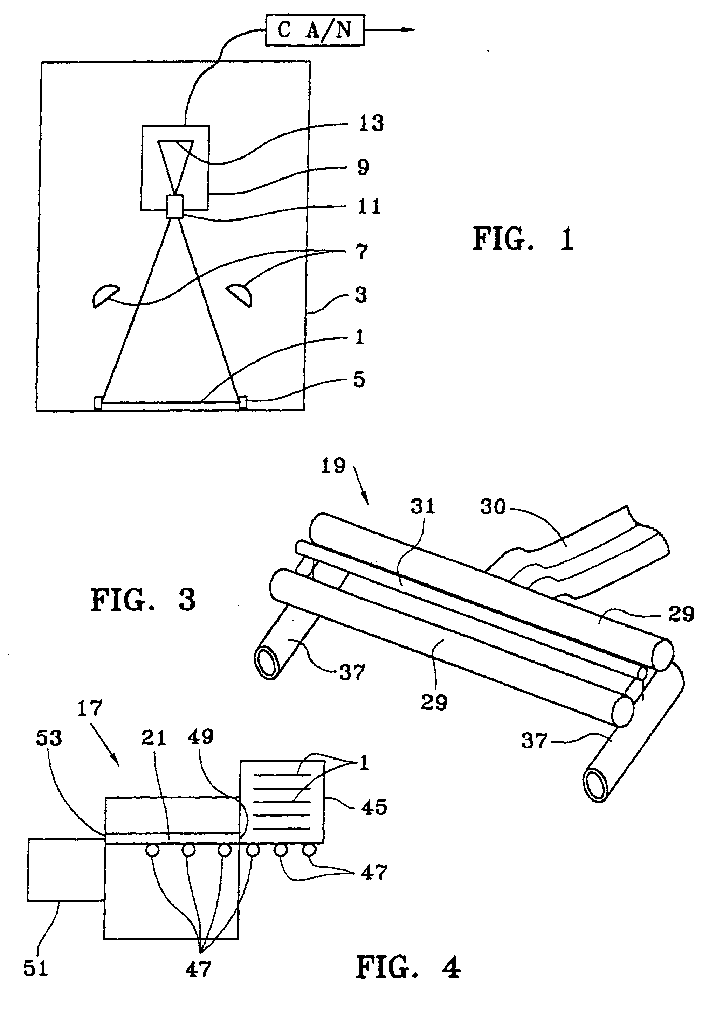

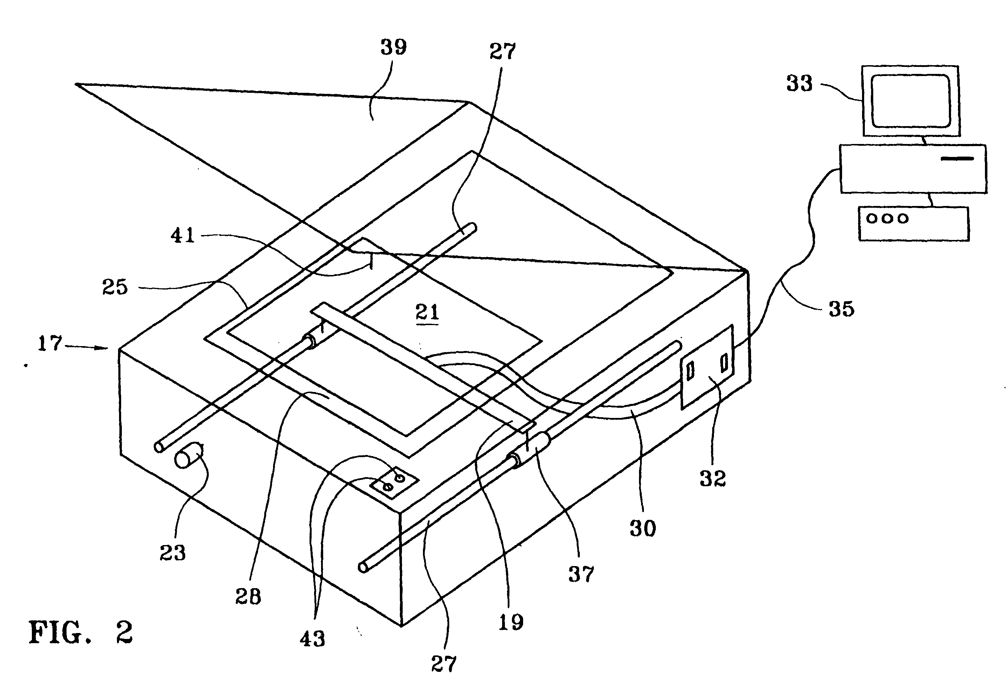

Sur les figures 1 à 4 on a utilisé les mêmes références pour désigner les mêmes éléments.

Sur la figure 1, on peut voir un exemple de réalisation d'un appareil de type connu décrit par exemple dans le journal « Research Institute for medical plants » H-2011 Budakasz, Hongrie, p. 251 et s. Un tel appareil d'acquisition d'images fluorescentes de plaque de chromatographie 1 comprend une enceinte 3 étanche à la lumière visible et au rayonnement UV, un support 5 de plaque chromatographique 1, un dispositif d'éclairage 7 comportant une ou plusieurs sources de rayonnement UV dirigé vers le support 5 et une caméra vidéo 9. La caméra 9 comporte typiquement un objectif 11 à focal fixe ou un zoom assurant la formation d'une image sur un capteur du type à couplage de charge 13. Le traitement de l'image obtenue par la caméra 9 est assurée des moyens de traitement numérique, typiquement un micro-ordinateur. La sortie de la caméra 9 est reliée à un convertisseur analogique/numérique qui peut être incorporé à l'appareil d'acquisition, former un boîtier électronique indépendant ou être incorporé à une carte d'acquisition d'un ordinateur.

Les dimensions de l'enceinte 3 formant la chambre noire sont déterminées principalement par la distance séparant l'objectif 11 du plan de mise au point correspondant au support 1 déterminé par les caractéristiques de la caméra 9 et notamment par la focal de l'objectif, par la mise au point effectuée et notamment par la distance entre l'objectif et le plan du capteur vidéo 13. Outre les inconvénients précités concernant l'encombrement, la faible définition des images fournies par la caméra 9 et le problème de manipulation, l'appareil de la figure 1 doit être muni de source d'UV 7 puissante susceptible d'éclairer uniformément, simultanément, toute la surface de la plaque 1.

L'appareil selon la présente invention peut être facilement réalisé à partir d'éléments standards disponibles ou, avantageusement, comme illustré sur les figures 2 et 3 être réalisé par modification d'un numériseur (scanner en terminologie anglo-saxonne) destiné à la bureautique et/ou aux arts graphiques. L'appareil 17 selon la présente invention comporte un chariot 19 susceptible, sur commande, de se déplacer devant une fenêtre 21 de réception d'un support d'images tel qu'une plaque de chromatographie rigide ou un support souple. Le chariot 19 est entraîné par des moyens d'entraînement 23, typiquement un moteur électrique pas à pas entraînant une courroie sans fin crantée. Le chariot 19 est guidé par un ou, de préférence, deux rails de guidage 27 disposés parallèlement au bord longitudinal 25 de la fenêtre 21. Le rail 27 est réalisé en tôle pliée ou, avantageusement est constitué par un profilé métallique par exemple cylindrique. Le chariot 19 porte d'une part une ou plusieurs sources de rayonnement UV 29, et d'autre part, un capteur vidéo linéaire 31, typiquement une barrette d'éléments à couplage de charge (CCD) s'étendant sur toute la largeur de la fenêtre 21. De même, les sources 29 s'étendent avantageusement parallèlement au capteur 31 sur toute la largeur de la fenêtre 21. En variante, les sources 29 de rayonnement UV sont stationnaires. Les sources 29 et le capteur vidéo 31 peuvent être associés à des éléments optiques tels que lentilles notamment cylindriques ou miroirs de renvoi. Il est essentiel que la fenêtre 21 permette la transmission du rayonnement d'illumination du support, notamment d'une plaque de chromatographie, provenant des sources 29 ainsi que la propagation de la lumière provenant, par réflection ou fluorescence du support 1 vers le capteur 31. Ainsi, la fenêtre 21 peut être dépourvue de vitre, le support étant réalisé par le rebord longitudinal 25 et/ou un rebord transversal 28 et/ou par un châssis placé sur ces rebords dans le cas de plaque de chromatographie de dimensions inférieures à celles de la fenêtre 21. Au contraire, la fenêtre 21 peut être munie d'une fenêtre transparente aux longueurs d'onde mises en oeuvre, notamment aux rayonnements UV et à la lumière visible. On peut par exemple utiliser une vitre en quartz ou en matériau plastique transparent aux rayonnements visibles et UV. Le chariot 19 est relié par un câble 30, par exemple en nappe à une carte électronique 32 assurant le contrôle des éléments du numériseur, la mise en forme des signaux, notamment un échantillonage, par exemple sur 24, 30 ou avantageusement sur 36 bits (8, 10 ou 12 bits par couleur primaire) et la communication avec un équipement externe 33, par exemple avec un micro ordinateur muni d'une carte d'interface parallèle ou SCSI et reliée au scanner par un câble 35. Avantageusement, on transmet à l'ordinateur une image sans réduire la dynamique des images codées par exemple sur 24, 30 ou 36 bits. Le chariot 19 comporte en outre des moyens de commutation des sources lumineuses 29 et du capteur vidéo 31, ainsi que des moyens 37 d'accouplement mécanique avec les rails 27, par exemple des manchons dans les cas de rails cylindriques et des moyens d'accouplement avec la courroie d'entraînement. Un capot 39 opaque à la lumière visible et aux rayonnements UV protège le capteur vidéo 31 de l'entrée de lumière parasite et. simultanément protège l'opérateur contre une irradiation par les rayonnements UV. Avantageusement, le capot 39 est muni des moyens 41 d'extinction des sources 29 dans le cas d'ouverture du capot. Par exemple le capot est muni d'un élément conducteur 41 assurant, lorsque le capot est fermé la continuité électrique entre des bornes 43 placées dans le corps du numériseur 17 et disposées en série avec l'alimentation électrique de source 29. Ainsi, une ouverture accidentelle du couvercle 39 interrompt instantanément l'émission des lumières UV vers l'opérateur et évite ainsi son irradiation par un rayonnement qui pourrait se révéler dangereux pour sa santé.

Le chariot 19 comporte par exemple une source 29, capable d'émettre des rayonnements UV à 254 nm, une source 29 capable d'émettre des rayonnements UV à une longueur d'onde de 365 nm ou une source de UV accordable à ces deux fréquences, ainsi qu'une source de lumière visible. Il est bien entendu que la mise en oeuvre de rayonnement présentant d'autres longueurs d'onde ne sort pas du cadre de la présente invention. Le capteur vidéo 31 comporte par exemple 2587 photosites répartis sur une longueur de 219 mm correspondant à une résolution de 300 points par pouces ou 5174 photosites répartis sur 219 mm correspondant à une résolution de 600 points par pouces, ou 10348 photosites répartis sur 219 mm correspondant à une résolution de 1200 points par pouces.

Le chariot 19, les moyens de guidage 27 et 37 et/ou les moyens d'entraînement tels que le moteur 23 ou la courroie crantée peuvent avantageusement être renforcés de manière à supporter le poids de source lumineuse supplémentaire sans perte de précision dans le déplacement du chariot typiquement égal à 76,2 points par mm (300 points par pouces), 152 points par mm (correspondant à 154,4 points par pouces), 304,8 points par mm (correspondant à 1200 points par pouces), ou 609,6 points par mm (correspondant à 2400 points par pouces).

Dans l'exemple préféré de réalisation, le numériseur 17 est un numériseur plat. Toutefois, il est bien entendu que la mise en oeuvre d'autres types de numériseurs, comme par exemple des numériseurs à défilement ou des numériseurs de diapositives dans lesquels on aurait placé une ou plusieurs sources 29 du côté du capteur vidéo ne sort pas du cadre de la présente invention. De même, on peut adapter un scanner à plat à tiroir de réception de diapositives tels que les scanner vendus sous la dénomination DUOSCAN par la société AGFA pour assurer la numérisation selon la présente invention de plaques de chromatographie. Dans ce cas également, les sources 29 sont placées du même côté que le capteur vidéo. Ce dernier type de scanner présente l'avantage de ne pas nécessiter de vitre en matériau transparent aux UV tout en assurant la protection contre la poussière du mécanisme du numériseur.

Sur la figure 4, on peut voir une variante d'un appareil selon la présente invention muni d'un chargeur automatique des plaques rigides de chromatographie 1. L'appareil 17 est muni d'une part d'un magasin 45 de réception d'une pile de plaques reposant sur un ensemble de rouleaux 47 dont au moins un est motorisé. Les rouleaux 47 sont disposés en vis-à-vis d'une fente 49 de réception de support 1 dans l'appareil 17. La fenêtre 21 est munie également de rouleaux 47 assurant l'éjection d'une plaque numérisée dans un magasin 51 situé par exemple sous une fente 53 d'éjection des plaques de chromatographie 1 traitées disposée à l'opposé de la fente 49.

L'appareil de prise de vues 17 selon la présente invention fonctionne de la manière suivante :
On dispose une plaque chromatographique classique de chromatographie planaire devant la fenêtre 21, notamment sur les rebords 25 et 28 ou dans le magasin 45. Dans ce dernier cas une commande logicielle émise par l'ordinateur 33 fait avancer la plaque devant la fenêtre 21. La plaque peut comporter, en plus d'un support de chromatographie de type connu, des moyens d'identification tels qu'un code-barres ou, avantageusement des caractères identifiables par reconnaissance optique de caractères. Les caractères sont avantageusement imprimés dans une fonte facilement identifiable telle que ROC B. Ainsi, on peut utiliser la définition élevée de l'image acquise par l'appareil 17 selon la présente invention pour assurer une correspondance bi-univoque entre des images acquises et des références correspondant aux échantillons traités par chromatographie.
On referme le couvercle 39. L'appareil 17 reçoit une commande de l'ordinateur 33, une commande programmée en usine ou une commande saisie sur un clavier de l'appareil (non représenté). Cette commande correspond à l'allumage d'une source lumineuse 29 et au balayage de la surface de la plaque 1 avec acquisition successive de toutes les lignes de l'image qui, simultanément est transmise à l'ordinateur 33. Le balayage peut ensuite être effectué à une fréquence différente (UV ou visible) de manière, dans ce dernier cas, à détecter des molécules directement colorées ou après action d'un révélateur plus ou moins spécifique. La fluorescence permet la détection des molécules directement fluorescentes ou la lecture de l'inhibition de fluorescence de plaque contenant un indicateur de fluorescence. Les images acquises sont avantageusement stockées dans une mémoire de masse classique, par exemple sur un disque dur de l'ordinateur 33 qui assure le traitement selon des règles strictes de "bonnes pratiques de laboratoire", afin d'obtenir des résultats qualitatifs et quantitatifs de spots susceptibles d'être présents sur la plaque 1. On utilise par exemple un logiciel vendu par la société JMBS sous le nom de BORWIN. Ce logiciel peut être complété par un logiciel de reconnaissance optique de caractères ou de lecture de code-barres. Les caractères identifiés, ou le code décodé est associé sous forme de références, de commentaires ou de noms de fichiers aux images traitées.

L'appareil selon la présente invention permet d'améliorer la précision du traitement dans la mesure où il fournit au logiciel de traitement d'images une image à haute définition comportant par exemple 4724 points sur 4724 points (pour une résolution du numériseur de 600 points par pouces) ou une définition de 9448 points par 9448 points pour une définition de 1200 points par pouces et pour des plaques de 20 cm de côté.

La présente invention est limitée à la chromatographie, et s'applique principalement à la chromatographie en planaire ou chromatographie sur couche mince.

## Revendications

1. Appareil d'acquisition d'images fluorescentes d'un objet plan comportant des moyens (21, 25, 28) de réception de l'objet plan dont on veut acquérir une image, une source (29) de rayonnement UV induisant la photoluminescence dudit objet (1) et un capteur à balayage (31) sensible au rayonnement fluorescent, **caractérisé en ce qu'**il comporte un chariot (19) portant un capteur linéaire à balayage (31) muni d'une pluralité de photosites alignés et au moins une source (29) de rayonnement UV pour émettre des rayonnements à deux longueurs d'onde afin de réaliser une analyse chromatographique de détection de substances chimiques directement fluorescentes et une détection par procédé d'inhibition de fluorescence, des moyens d'entraînement (23) du chariot (19) par rapport à la zone de l'objet (1, 21) dont on veut acquérir l'image et des moyens de commande (32) assurant l'élaboration de commande d'éclairage avec un rayonnement UV et de déplacement du chariot (19) par rapport à l'objet avec acquisition d'une succession des lignes d'images correspondant à au moins une zone de l'objet plan (1) dont on veut acquérir l'image.

2. Appareil d'acquisition d'images selon la revendication 1, **caractérisé en ce que** ledit appareil est un numériseur à plat avec des moyens de maintien de l'objet (1) stationnaire et du déplacement du chariot (19).

3. Appareil selon la revendication 1, **caractérisé en ce que** la source de rayonnement UV (29) est une source linéaire disposée parallèlement au capteur linéaire (31).

4. Appareil selon l'une quelconque des revendications précédentes, **caractérisé en ce qu'**il comporte une fenêtre (21) dépourvue de vitre et correspondant à la zone d'acquisition balayée par le chariot (19).

5. Appareil selon l'une quelconque des revendications 1 à 4, **caractérisé en ce qu'**il comporte une fenêtre correspondant à la zone d'acquisition de l'objet (1) munie d'une vitre réalisée en un matériau transparent au rayonnement visible fluorescent et au rayonnement induisant la photoluminescence.

6. Appareil selon l'une quelconque des revendications précédentes, **caractérisé en ce qu'**il comporte une source de rayonnement UV accordable sur plusieurs longueurs d'onde de rayonnement UV.

7. Appareil selon l'une quelconque des revendications 1 à 5, **caractérisé en ce qu'**il comporte deux sources de rayonnement UV, émettant à deux longueurs d'onde différentes adaptées respectivement aux deux détections à effectuer.

8. Appareil selon l'une quelconque des revendications précédentes, **caractérisé en ce qu'**il comporte un capot (39) muni de moyens (41, 43) d'arrêt automatique d'émission de rayonnement UV si le capot n'est pas parfaitement fermé.

9. Appareil selon l'une quelconque des revendications précédentes, **caractérisé en ce qu'**il comporte un chargeur (45, 47, 49, 51, 53) assurant l'alimentation automatique en plaque rigide de chromatographie de la fenêtre (21) d'acquisition d'images.

10. Système de traitement d'images fluorescentes de chromatographie planaire, **caractérisé en ce qu'**il comporte un appareil selon l'une quelconque des revendications précédentes associé à un ordinateur (33) muni d'un logiciel de traitement d'images.

## Patentansprüche

1. Vorrichtung zur Erfassung von Fluoreszenzbildern eines flachen Gegenstandes mit Mitteln (21, 25, 28) zur Aufnahme des flachen Gegenstandes, von dem ein Bild erfasst werden soll, einer UV-Strahlenquelle (29), welche die Fotolumineszenz des Gegenstandes (1) hervorruft und einem fluoreszenzstrahlungempfindlichen Abtastsensor (31), **dadurch gekennzeichnet, dass** sie einen Support (19) mit einem linearen Abtastsensor (31) mit mehreren aneinandergereihten Fotodioden enthält sowie mindestens eine UV-Strahlenquelle (29) zur Ausstrahlung mit zwei Wellenlängen zur Durchführung einer chromatographischen Analyse zur Erfassung chemischer, direkt fluoreszierender Stoffe und zur Durchführung einer Erfassung durch ein Fluoreszenzinhibitionsverfahren, Mittel (23) zum Antreiben des Supports (19) in Bezug auf den Bereich (1, 21) des Gegenstandes, von dem das Bild erfasst werden soll, sowie Steuermittel (32), welche die Erstellung der Steuerung der Beleuchtung mit einer UV-Strahlung sowie die Erstellung der Bewegung des Supports (19) in Bezug auf den Gegenstand unter Gewinnung einer Folge der Bildlinien sicherstellen, welche mindestens einem Bereich des flachen Gegenstandes (1) entsprechen, von dem ein Bild erfasst werden soll.

2. Vorrichtung zur Bildererfassung nach Anspruch 1, **dadurch gekennzeichnet, dass** die Vorrichtung ein Flachbett-Scanner mit Mitteln zur ortsfesten Fixierung des Gegenstandes (1) sowie zur Bewegung des Supports (19) ist.

3. Vorrichtung nach Anspruch 1, **dadurch gekennzeichnet, dass** die UV-Strahlenquelle (29) eine parallel zum linearen Sensor (31) angeordnete lineare Quelle ist.

4. Vorrichtung nach einem der vorhergehenden Ansprüchen, **dadurch gekennzeichnet, dass** sie ein scheibenloses Fenster (21) enthält, das dem vom Support (19) abgetasteten Erfassungsbereich entspricht.

5. Vorrichtung nach einem der Ansprüche 1 bis 4, **dadurch gekennzeichnet, dass** sie ein dem Bereich der Erfassung des Gegenstands (1) entsprechendes Fenster enthält, das mit einer Scheibe versehen ist, welche aus einem Material besteht, welches für die sichtbare Fluoreszenzstrahlung und für die Strahlung, die Fotolumineszenz hervorruft, durchsichtig ist.

6. Vorrichtung nach einem der vorhergehenden Ansprüchen, **dadurch gekennzeichnet, dass** sie eine UV-Strahlenquelle enthält, welche auf mehrere UV-Strahlen-Wellenlängen abgestimmt werden kann.

7. Vorrichtung nach einem der Ansprüche 1 bis 5, **dadurch gekennzeichnet, dass** sie zwei UV-Strahlenquellen enthält, welche mit zwei unterschiedlichen Wellenlängen ausstrahlen, die jeweils den beiden durchzuführenden Erfassungen angepasst sind.

8. Vorrichtung nach einem der vorhergehenden Ansprüchen, **dadurch gekennzeichnet, dass** sie einen Deckel (39) enthält mit Mitteln (41, 43) zum automatischen Stoppen der Aussendung von UV-Strahlen, wenn der Deckel nicht vollkommen geschlossen ist.

9. Vorrichtung nach einem der vorhergehenden Ansprüchen, **dadurch gekennzeichnet, dass** sie eine Ladeeinrichtung (45, 47, 49, 51, 53) zur automatischen Beschickung des Fensters (21) zur Bildererfassung mit einer starren Chromatographieplatte enthält.

10. System zur Verarbeitung von planarchromatographisch erfassten Fluoreszenzbildern, **dadurch gekennzeichnet, dass** es eine Vorrichtung nach einem der vorhergehenden Ansprüchen enthält, welche mit einem Rechner (33) mit einer Software zur Bilderverarbeitung gekoppelt ist.

## Claims

1. Apparatus for acquiring fluorescent images of a flat object comprising means (21, 25, 28) of receiving the flat object whose image it is wished to acquire, a source (29) of UV radiation inducing the photoluminescence of said object (1) and a scanning sensor (31) sensitive to the fluorescent radiation, **characterised in that** it comprises a carriage (19) carrying a linear scanning sensor (31) equipped with a plurality of aligned photosites and at least one UV radiation source (29) for emitting radiation at two wavelengths in order to carry out a chromatographic analysis for detection of directly fluorescent chemical substances and detection by a fluorescence inhibition method, means (23) of driving the carriage (19) with respect to the area of the object (1, 21) whose image it is wished to acquire and control means (32) providing the production of controls for illumination with UV radiation and movement of the carriage (19) with respect to the object with acquisition of a succession of image lines corresponding to at least one area of the flat object (1) whose image it is wished to acquire.

2. Image acquisition apparatus according to Claim 1, **characterised in that** said apparatus is a flatbed scanner with means of holding the object (1) stationary and movement of the carriage (19).

3. Apparatus according to Claim 1, **characterised in that** the UV radiation source (29) is a linear source disposed parallel to the linear sensor (31).

4. Apparatus according to any one of the preceding claims, **characterised in that** it comprises a window (21) devoid of a glazing pane and corresponding to the acquisition area scanned by the carriage (19).

5. Apparatus according to any one of Claims 1 to 4, **characterised in that** it comprises a window corresponding to the acquisition area of the object (1) equipped with a glazing pane produced from a material transparent to the fluorescent visible radiation and to the radiation inducing the photoluminescence.

6. Apparatus according to any one of the preceding claims, **characterised in that** it comprises a UV radiation source which can be tuned to a number of UV radiation wavelengths.

7. Apparatus according to any one of Claims 1 to 5, **characterised in that** it comprises two UV radiation sources, emitting at two different wavelengths adapted respectively to the two detections to be performed.

8. Apparatus according to any one of the preceding claims, **characterised in that** it comprises a cover (39) equipped with means (41, 43) for automatic halting of UV radiation emission if the cover is not completely closed.

9. Apparatus according to any one of the preceding claims, **characterised in that** it comprises a loader (45, 47, 49, 51, 53) providing the automatic supply with rigid chromatography plates of the image acquisition window (21).

10. Planar chromatography fluorescent image processing system, **characterised in that** it comprises an apparatus according to any one of the preceding claims associated with a computer (33) equipped with image processing software.
